Europäisches Patentamt

European Patent Office

Office européen des brevets

(19)

(11) Numéro de publication: **0 001 950**
**A1**

# (12) DEMANDE DE BREVET EUROPEEN

(21) Numéro de dépôt: 78400151.3

(22) Date de dépôt: 26.10.78

(51) Int. Cl.²: **B 60 Q 11/00**
**H 05 B 39/10**

(30) Priorité: 02.11.77 AU 2265/77
03.04.78 AU 34731/78

(43) Date de publication de la demande:
16.05.79 Bulletin 79/10

(84) Etats contractants désignés:
BE CH DE FR GB NL SE

(71) Demandeur: Knees, Hans

Burbong via Queanbeyan New South Wales 2620(AU)

(72) Inventeur: Knees, Hans

Burbong via Queanbeyan New South Wales 2620(AU)

(74) Mandataire: Lemonnier, André
Conseil en Brevets 4 Boulevard Saint Denis
F-75010 Paris(FR)

(54) Installation d'éclairage de secours pour véhicule.

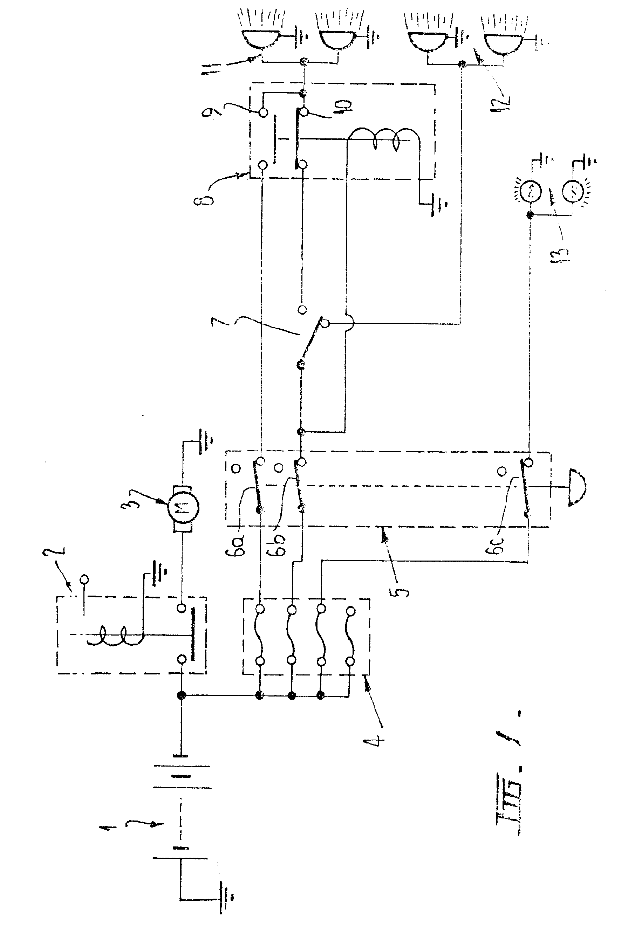

(57) A vehicle light system including an emergency circuit which will automatically switch on is disclosed. Thus as shown in Figure 1, if the fuse feeding contacts (6b) blows, or if there is a failure of contacts (6b), the current flow to relay (8) will cease, allowing the relay to return to its unenergised condition, i.e. it will close contacts (9) which are supplied by current through a different fuse than that supplying contacts (6b), and said current passing through contacts (6a), which were closed when switch (5) was put in the "on" position. This current flow will energise low-beam filaments (11), enabling forward vision to be maintained, and avoiding the danger of an accident.

EP 0 001 950 A1

$\overline{III}$. 1.

- 1 -

## A Vehicle Lighting System Having an Emergency Circuit

This invention relates to the electrical circuits of motor cars, motor bikes, or similar motorised vehicles such as mobile vehicles equipped with headlights for night driving. It is also applicable to other land as well as sea and air craft.

For the sake of brevity the invention, in the main, will hereinafter be described in relation to motor vehicles.

While a vehicle is being driven at night, it occasionally happens that owing to a circuit defect the protection fuse blows, causing headlight failure and forward vision is lost; a similar result can occur if there is a defective headlight switch - in this case a fuse does not blow, but nevertheless power is cut off from the lights as a result of an open circuit (e.g. caused by faulty contacts in the switch). This situation where forward vision is lost at night is intolerable, owing to the danger of accident.

The object of this invention is to incorporate an arrangement into the headlamp circuit of motor vehicles which will automatically and immediately switch on an alternative lighting circuit when the main circuit fails. Normally the "main circuit" will comprise the high beam filament of the headlight-globes, since most night driving is done on high-beam. If the reverse is true (e.g. in big cities most night driving is done on low-beam), the circuit arrangement can be modified accordingly, to automatically switch on the high-beam filaments.

Thus broadly according to this invention there is provided a vehicle light system including a main lighting circuit, and an emergency lighting circuit, each circuit adapted to be connected to a source of electrical current; a manually operated light switch serving to open or close both circuits together, a second switch in the emergency circuit adapted to open or close the circuit, means responsive to current flow in the main circuit for controlling the operation of the second switch, the arrangement being such that when the light switch is on and the system is operating normally, current flow in the main circuit causes the means to operate the second switch to maintain the emergency circuit open, but if current flow in the lighting circuit ceases while the light switch remains on, the second switch immediately closes the emergency lighting circuit for operation thereof.

The means responsive to current flow in the main circuit may be the coil of a relay in the main circuit, the second switch being constituted by the contacts thereof. The means responsive to current flow in the main circuit may comprise a photo-electric cell operated device in which a light source is powered by current flow in the main circuit, the light source while operating causing a photo-electrical cell to become conducting and pass current through a relay, the contacts of which are adapted to open or close the emergency circuit and constitute the second switch.

In one embodiment there is provided a motor vehicle driving light system including a main lighting circuit and an emergency lighting circuit, the light system including a plurality of dual filament lamps, one filament of each lamp being in the main circuit, the other filament of each lamp being in the emergency circuit, both the circuits adapted to be connected to the battery/generator circuit of the vehicle; a manually operated light switch serving to open or close both circuits together, the main lighting circuit including a dip switch to permit switching the current from the one filament in the main circuit through a line in parallel to the emergency circuit to supply the other filaments in the emergency circuit; the coil of a relay being connected from a point in the main circuit between the light switch and the dip switch to earth, whereby the position of the dip switch will not alter the operation of the relay, the contacts of the relay constituting a switch in the emergency circuit to open or close the circuit respectively according to whether current is flowing in the relay or not; the arrangement being such that when the light switch is on with the system operating normally, and irrespective of the position of the dip switch, the relay holds the emergency circuit open, but when there is a cessation of current flow in the mains circuit, current flow in the relay also ceases causing the emergency circuit to be closed and become operative, thereby energising or re-energising the other filaments.

In another preferred embodiment there is provided a motor vehicle driving light system including a main lighting circuit and an emergency lighting circuit, the main circuit including a plurality of dual filament lamps, alternative filaments being energised by a dip switch in the main circuit, the emergency circuit including one or more lamps independent of the main circuit, both the circuits adapted to be connected to the battery/generator circuit of the vehicle; a manually operated light switch serving to open or close both circuits together, the coil of a relay being connected from a point in the main circuit between the light switch and the dip switch to earth, whereby the position of the dip

- 4 -

switch will not alter the operation of the relay, the contacts of the relay constituting a switch in the emergency circuit to open or close the circuit respectively according to whether current is flowing in the relay or not; the arrangement being such that when the light switch is on with the system operating normally, the relay holds the emergency circuit open, but when there is a cessation of current flow in the main circuit, current flow in the relay also ceases causing the emergency circuit to be closed and become operative, thereby energising said one or more independent lamps.

However, for the purposes of simplicity, the following description is restricted to normal passenger-type motor vehicles, in which the main night driving is done with the headlights on high beam.

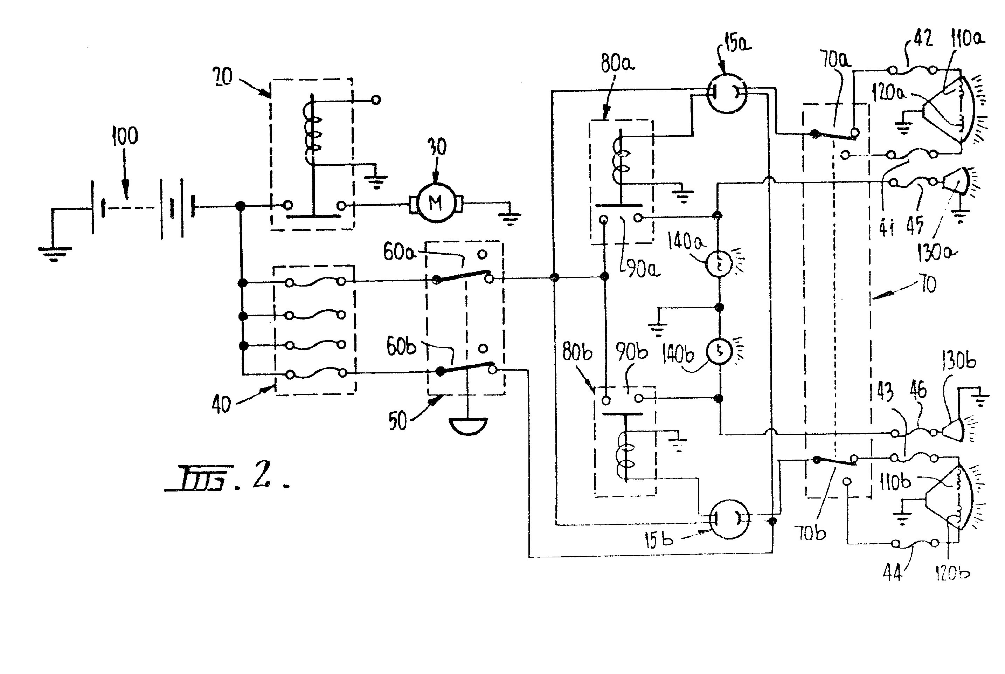

Figures 1 and 2 illustrate preferred circuits on mobile vehicles arranged to maintain a lighting circuit on despite a failure in the system. The circuit of Figure 1 causes low-beam filaments to be energised when the high-beam circuit fails; the circuit of Figure 2 is designed such that if the normal high or low beams fail, an emergency circuit energises a separate lighting circuit.

Referring to Figure 1, (1) represents the vehicle battery, (2) is the starter motor relay, and (3) the starter motor. (4) schematically illustrates the fuse box while (5) is the light switch of the vehicle illustrated in the "on" position with the three sets of contacts (6a), (6b) and (6c) all closed. The dip switch is (7). (8) is a relay arrangement forming part of the circuit of the invention with contact sets (9) and (10). The lights are schematically illustrated by (11), (12) and (13), being respectively, low-beam filaments, high-beam filaments, and tail/parking lights.

The lighting portion of the circuit operates as follows : the safety relay (8) is set so that it normally (i.e. when unenergised) closes contacts (9), but when current flows through the relay it opens contacts (9) and closes contacts (10). The initial lights off condition of the circuit then, is with contacts (6a), (6b), (6c) and (10) open, and contacts (9) closed.

When switch (5) is operated to switch on the lights, contacts (6a), (6b) and (6c) close. Lights (13) are energised, and current flows through dip switch (7) (which is illustrated in the high-beam position) to energise high-beam filaments (12). Simultaneously, current flows through relay (8) which then closes contacts (10). With contacts (10) closed, the dip switch can be moved to its alternative position to energise low-beam filaments (11). Clearly, from the circuit, movement of the switch (7) does not interfere with the current flow to relay (8).

Now, if the fuse feeding contacts (6b) blows, or if there is a failure of contacts (6b), the current flow to relay (8) will cease, allowing the relay to return to its unenergised condition, i.e. it will close contacts (9) which are supplied by current through a different fuse than that supplying contacts (6b), and said current passing through contacts (6a), which were closed when switch (5) was put in the "on" position. This current flow will energise low- beam filaments (11), enabling forward vision to be maintained, and avoiding the danger of an accident.

It should be noted that if dip switch (7) is in the low- beam position (i.e. electrically connecting fuse (6b) to contacts (10)) with light switch (5) in the "on" position, the current flow to relay (8) is not interrupted. That is, the low-beam filaments (11) are energised through contacts (10) and (6b). Should contact (6b) fail, or should the fuse supplying current therethrough blow, relay (8) is de-energised, thus closing contacts (9) and causing filaments (11) to be re-energised through the alternative circuit including contacts (6a).

Turning now to Figure 2, circuit items idertifiable with those of Figure 1 have been allotted the same digits as the lead digits of their designating numerals, i.e. low-beam filaments (11) are designated (110a) and (110b). As before, the battery (100) feeds through the starter relay (20) supplying the starter motor (30); another line feeds through fuse box (40) and thence to the lighting system. The lower-illustrated line supplies current to the standard high- and low-beam filaments (120a, 120b, 110a and 110b respectively) of the forward driving lights. The upper-illustrated line supplies current to the emergency circuit which includes emergency light filaments (130a, 130b). The lights carrying the latter filaments can be set to throw a high or a low beam.

The light switch (5) is operable to close contacts (60b) and (60a) which respectively energise the said lower and upper lines. The dip switch (70) has a pair of (mechanically) connected poles (70a, 70b) which operate to switch power between the high and low beam filaments.

The emergency circuit includes a pair of relays (80a, 80b) opening or closing contacts (90a, 90b) respectively, and a pair of photoelectric cell operated switches (15a, 15b) controlling relays (80a, 80b). If desired, warning lights (140a, 140b) can be included in the circuit as a warning that one or both of the sections of the emergency circuit fed through the relays (80a, 80b) respectivel has or have been energised.

As a further safety feature, fuses (41, 42, 43 45, 46) can be included in the lighting circuit relatively close to the filaments.

The operation of this circuit is as follows :- when light switch (50) is operated, contacts (60a, 60b) are closed and current immediately flows through photo-electric devices (15a, 15b), poles (70a, 70b) of the dip switch (70) and thence to the low-beam filaments (110a, 110b) of the normal forward lights. If poles (70a, 70b) are moved from their illustrated positions to meet their alternate contacts, current will be switched from the low-beam filaments (110a, 110b) to the high-beam filaments (120a, 120b). The position of each dip switch pole (70a, 70b) in the circuit is such that irrespective of whether it is in the high or low beam position, the light filament current supplied through it must pass through the filament of a light source in the associated photo-electric switch device. Each photo-electric switch device (15a, 15b) comprises a source of light and a photo-electric cell, which is conducting when the source of light is operating. As can be seen from the circuit (and as stated above) the source of light comprises a filament which carries the current feeding to one of the dip switch poles (70a, 70b), the photo-electric cell is in a separate circuit in series with one of the relays (80a, 80b).

While current flows through the light sources of the photo-electric switch devices, the photo-electric cells are in a state of conduction, and permit the flow of current through relays (80a, 80b) fed from the contacts (60a). The relays (80a, 80b) are set so that while they carry current, contacts (90a, 90b) are held open, but if either relay ceases to carry current, its associated contacts (90a or 90b) will be closed, thus permitting current to flow to filaments (130a) or (130b) of the alternate emergency forward lights.

Thus should there be a current failure in a filament circuit of one of the normal forward lights, current is immediately switched to an emergency light filament on the same side of the vehicle as the failed light. It will be noted that this circuitry has the following exceptional advantages;

(1) Since there are in effect two emergency circuits, the system is selective in relation to light failure, i.e. if the left forward light fails, only the left emergency light comes on, and warning light (140a) will immediately be energised to indicate that there has been a circuit failure, and which light circuit is involved  On the other hand, the system can, of course, replace both the normal forward lights if both fail.

(2) The system will operate if there has been a failure in the main light circuit anywhere from the supplying fuse in the box (40) to the grounding point of the filament involved.

(3) As a consequence of (2), the system will operate even if one filament of the normal lights burns out. (This is not the case with circuit of Figure 1, which would not operate unless the (energised) filaments of both forward lights were to burn out - an unlikely occurrence).

It will be appreciated that the circuit of Figure 2 need not include photo-electric switch devices, thus the current feeding the light source filament in each device could directly feed through relays (80a, 80b) and then to the dip switch poles (70a, 70b) respectively, instead of passing to earth as illustrated.

Again, while the above circuits have been described with respect to passenger motor vehicles, they are equally applicable to motor-cycles, earth moving machines, cross-terrain vehicles, or other land, sea or air craft lighting systems. Similarly, those skilled in the art will appreciate that the described circuit arrangement could be incorporated in the tail-light circuit of motor vehicles (all tail lights incorporate double lighting arrangements, i.e. for braking as well as demarcation of the vehicle rear), or be arranged to switch from low beam to high beam if required.

Finally, it is emphasised that the foregoing description is not intended to delimit the invention which is intended to be given a broad connotation, variations such as those apparent to persons skilled in the art are encompassed by this invention.

Claims :

1. A vehicle light system including a main lighting circuit, and an emergency lighting circuit, each circuit adapted to be connected to a source of electrical current; a manually operated light switch serving to open or close both circuits together; a second switch in said emergency circuit adapted to open or close said circuit, means responsive to current flow in said main circuit for controlling the operation of said second switch, the arrangement being characterized in that when said light switch is on and the system is operating normally, current flow in said main circuit causes said means to operate said second switch to maintain said emergency circuit open, but if current flow in the lighting circuit ceases while said light switch remains on, said second switch immediately closes said emergency lighting circuit for operation thereof.

2. A vehicle light system as defined in claim 1 further characterised in that the means responsive to current flow in said main circuit is the coil of a relay in said main circuit, said second switch being constituted by the contacts thereof.

3. A vehicle light system as defined in claim 1 further characterised in that the means responsive to current flow in said main circuit comprises a photo-electric cell operated device in which a light source is powered by current flow in said main circuit, said light source while operating causing a photo-electrical cell to become conducting and pass current through a relay, the contacts of which are adapted to open or close said emergency circuit and constitute said second switch.

4. A vehicle light system as defined in claim 1 further characterised in that the light system includes a dual filament lamp, one of said filaments being in said main circuit, the other being in said emergency circuit, whereby failure of the filament in the main circuit or cessation of current flow in that circuit causes the emergency circuit to become operative and energise said other filament.

5. A vehicle light system as defined in claim 1 further characterised in that the said main and emergency circuits operate safety or navigation lights of the vehicle.

6. A vehicle light system as defined in claim 1 further characterised in that the said main and emergency circuits operate forward driving lights of the vehicle.

7. A motor vehicle driving light system including a main lighting circuit and an emergency lighting circuit, said light system including plurality of dual filament lamps, one filament of each lamp being in said main circuit, the other filament of each lamp being in said emergency circuit, both said circuits adapted to be connected to the battery/ generator circuit of the vehicle; a manually operated light switch serving to open or close both circuits together, said main lighting circuit including a dip switch to permit switching the current from said one filament in said main circuit through a line in parallel to said emergency circuit to supply said other filament in said emergency circuit; the coil of a relay being connected from a point in the main circuit between said light switch and said dip switch to earth, whereby the position of the dip switch will not alter the operation of the relay, the contacts of said relay constituting a switch in said emergency circuit to open or close said circuit respectively according to whether current is flowing in said relay or not; the arrangement being characterised in that when said light switch is on with the system operating normally, and irrespective of the position of the dip switch, the relay holds said emergency circuit open, but when there is a cessation of current flow in said mains circuit, current flow in said relay also ceases causing the emergency circuit to be closed and becomes operative, thereby energising or re-energising said other filaments.

8.      A motor vehicle driving light system including a main lighting circuit and an emergency lighting circuit, said main circuit including a plurality of dual filament lamps, alternative filaments being energised by a dip switch in said main circuit, said emergency circuit including one or more lamps independent of said main circuit, both said circuits adapted to be connected to the battery/generator circuit of the vehicle; a manually operated light switch serving to open or close both circuits together, the coil of a relay being connected from a point in the main circuit between said light switch and said dip switch to earth, whereby the position of the dip switch will not alter the operation of the relay, the contacts of said relay constituting a switch in said emergency circuit to open or close said circuit respectively according to whether current is flowing in said relay or not; the arrangement being characterised in that when said light switch is on with the system operating normally, the relay holds said emergency circuit open, but when there is a cessation of current flow in said main circuit, current flow in said relay also ceases causing the emergency circuit to be closed and become operative, thereby energising said one or more independent lamps.

FIG. 1.

0001950

_FIG. 2._

## DOCUMENTS CONSIDERED TO BE RELEVANT

| Category | Citation of document with indication, where appropriate, of relevant passages | Relevant to claim |
|---|---|---|
| X | US - A - 2 265 122 (LAUCK) <br> * Page 1, right-hand column, line 39 to page 2, left-hand column, line 36; figure 1 * | 1,2,5,6 |
| X | US - A - 2 558 281 (TESSIER) <br> * Column 1 to column 2, line 36; figures 1 to 5 * | 1,2,5,6 |
| X | US - A - 2 693 551 (HALL) <br> * Column 1 to column 2, line 79; figures * | 1,2,5,6 |
| X | FR - A - 994 745 (TABACCHI) <br> * Figures * | 1,2,5,6 |
| X | CH - A - 269 921 (LOPEZ) <br> * Figures * | 1,2 |
| X | GB - A - 1 146 134 (RAMSEY) <br> * Page 1 to page 2, line 7 * | 1,2,4-8 |

**CLASSIFICATION OF THE APPLICATION (Int. Cl.²)**

B 60 Q 11/00
H 05 B 39/10

**TECHNICAL FIELDS SEARCHED (Int.Cl.²)**

B 60 Q 11/00
H 05 B 39/10
37/03
41/46

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 12-01-1979 | ONILLON |

EPO Form 1503.1 06.78